**Europäisches Patentamt**

**European Patent Office**

**Office européen des brevets**

⑩

(11) Publication number: **0 156 051**
**B1**

(12) # EUROPEAN PATENT SPECIFICATION

(45) Date of publication of patent specification: **10.06.87**

(21) Application number: **84301968.8**

(22) Date of filing: **23.03.84**

(51) Int. Cl.⁴: **C 01 B 31/02, C 04 B 35/52**

(54) **Method for producing carbon powders.**

(43) Date of publication of application:
**02.10.85 Bulletin 85/40**

(45) Publication of the grant of the patent:
**10.06.87 Bulletin 87/24**

(84) Designated Contracting States:
**DE FR GB**

(56) References cited:
**EP-A-0 068 519**
**DE-A-2 558 111**
**DE-C- 291 727**
**DE-C- 817 269**
**GB-A-1 220 482**
**GB-A-1 298 255**
**GB-A-1 496 695**
**US-A-4 071 604**

(73) Proprietor: **KAWASAKI STEEL CORPORATION**
**No. 1-28, 1-Chome Kitahonmachi-Dori**
**Fukiai-Ku Kobe-Shi Hyogo 651 (JP)**

(72) Inventor: **Fukuda, Noriyoshi**
**Research Laboratories Kawasaki Steel Corp.**
**1, Kawasaki-Cho Chiba City (JP)**
Inventor: **Nagasawa, Ken**
**Research Labboratoties Kawasaki Steel Corp.**
**1, Kawasaki-Cho Chiba-City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Courier Press, Leamington Spa, England.

**Description**

The present invention relates to a method for producing carbon powders adapted to be used as a raw material for the production of a carbon article, and more particularly relates to a method for producing carbon powders having characteristic values of BI (benzene-insoluble component)>95 wt.%, QI (quinoline-insoluble component)>80 wt%, and VM (volatile matter): 4—15 wt%, and being able to be made into a high-density carbon article through forming and firing without the use of a binder.

Carbon articles have various excellent properties, for example, carbon articles are good conductors for electricity and heat; have high stability up to a high temperature under non-oxidizing atmosphere, high strength at high temperatures, high erosion resistance against acid, alkali and other chemicals, high mechanical workability and high self-wettability; and are small in the area for absorbing thermal neutron, and excellent in the deceleration capacity for neutron. Therefore, carbon articles are widely used as an electrode in the steel making, electric brush, materials for nuclear reactor, and materials for machine.

These carbon articles are generally produced by mixing filler coke with a binder, forming the mixture into a shaped article, and firing and graphitizing the green shaped article. However, complicated operation steps are required in the mixing of the filler coke with the binder, and the operation environment is unhealthy. Moreover, the aggregate coke itself is porous, and coal tar pitch, synthetic resin and the like to be used as a binder generate a large amount of voids during the firing, and therefore the resulting carbon articles have a density of as low as about 1.5—1.7 g/cm$^3$ and a flexural strength of maximum 500 kg/cm$^2$. Further, the resulting carbon articles are generally anisotropic due to the anisotropy of filler coke, and therefore it is difficult to produce isotropic carbon articles having high density and strength.

However, carbon articles having high quality are recently demanded depending upon the development of industry, and various needs of isotropic carbon articles having high density and strength are rapidly increasing.

The inventors have made various investigations in order to obviate the drawbacks of conventional methods for producing carbon articles, to eliminate the drawbacks of carbon articles themselves produced through conventional methods, and to satisfy the demands for the quality of carbon articles in the market, and have succeeded in the development of a novel method for producing carbon powders capable of being stably made into isotropic carbon article, which has a density and a strength higher than those of any other commonly known carbon articles and further has various excellent properties, without the use of a binder contrary to conventional methods.

The feature of the present invention lies in a method for producing carbon powders, comprising heat treating a coal tar pitch at a temperature of 350—600°C, subjecting the heat treated pitch to a solvent-extraction and filtration to obtain a solvent-extraction and filtration residue having characteristic values of BI (benzene-insoluble component)>90 wt%, and QI (quinoline-insoluble component)<95 wt%, and calcining the residue at a temperature of 250—500°C under an inert gas atmosphere to obtain a calcined product having characteristic values of BI>95 wt%, QI>80 wt%, and VM (volatile matter): 4—15 wt%.

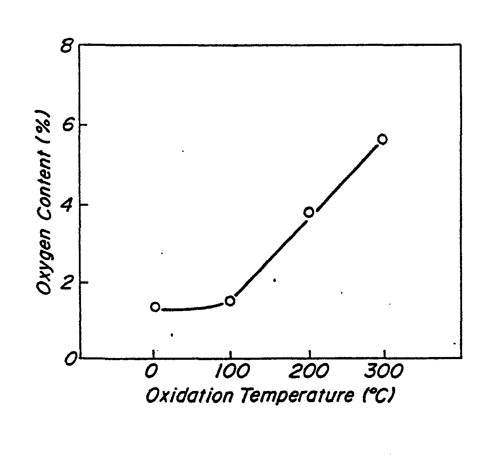

The single Figure of the accompanying drawing is a graph illustrating a relation between the oxidation treatment temperature of a calcined product produced in Example 5 and the oxygen content in the oxidation product thereof, wherein the abscissa indicates the treatment temperature (°C) and the ordinate indicates the oxygen content (%) in the oxidation product.

The method of producing the carbon powders of the present invention comprises four main steps of (1) heat treatment of coal tar pitch, (2) solvent-extraction and filtration of the heat treated pitch, (3) calcination of the solvent-extraction and filtration residue, and (4) classification of the calcined product. Among the steps, the three steps of (1) the heat treatment, (2) the solvent-extraction and filtration, and (3) the calcination are indispensable steps for obtaining the carbon powders which can be stably made into a carbon article without the use of a binder.

The classification step is a step for separating the calcined product obtained in the calcination step into a fine particle component and a coarse particle component in an optional amount ratio in order to improve the quality of a carbon article produced from the resulting carbon powders.

The present invention will be explained in more detail in the order of production steps.

Coal tar pitch is heat treated at 350—600°C according to a conventional method. Quinoline-insoluble component (hereinafter, abbreviated as QI component) consisting of high molecular substances is formed in the pitch corresponding the rising of the heat treatment temperature. In general, in this heat treatment, the QI component begins to be formed at a temperature of about 350°C, and the amount of the QI component is increased corresponding to the rising of the heat treatment temperature, and substantially all the QI component is formed up to 600°C. The QI component, which is generally called as "mesophase", has a structure similar to that of graphite and may be called as graphite precursor contrary to QI component, which is originally contained in the pitch and is called as "free carbon". Although the mesophase QI component itself has a caking property, the caking property and sinterability thereof are poor, and the QI component is difficult to be made into a large size carbon article without the use of a binder.

In the solvent-extraction and filtration step following to the heat treatment step, the QI component is separated in the form of a filtration residue from the heat treated pitch together with β component which is contained in the pitch and is a benzene-insoluble and quinoline-soluble component.

2

The β component has a molecular weight somewhat lower than that of the QI component, but has a very high caking property contrary to the QI component, and acts as a binder in the production a carbon article. However, the β component generates a large amount of volatile matter during the firing step in the production of a carbon article. Therefore, the use of the filtration residue without calcination causes cracks and expansion of a green shaped article formed from the resulting carbon powders, due to the presence of the β component, during the firing and graphitization of the green shaped article in the production of a carbon article.

BS component (benzene-soluble component) contained in the heat treated pitch is inferior in the caking property to the β component, and further contains volatile matter in an amount considerably larger than the amount contained in the β component. Accordingly, the green shaped article is apt to crack and expand more easily due to the presence of the BS component than the presence of the β component, and it is desirable to remove the BS component as possible in the solvent-extraction step.

In general, it is necessary to use several kinds of solvents in a large amount in order to remove the BS component in the solvent-extraction and filtration of heat treated pitch. The BS component in the solvent-extraction and filtration residue can be removed by drying the residue at a temperature of lower than 250°C under an atmospheric pressure or vacuum. However, the β component does not evaporate in the drying treatment to remain in the dried residue. When a large amount of β component remains, the green shaped article formed from the resulting carbon powders cracks and expands during the firing and graphitization steps. Accordingly, when it is intended to use directly the dried residue as a raw material for the production of carbon articles, the β component must be removed. However, in the present invention, the solvent-extraction and filtration residue is calcined following to the solvent-extraction and filtration step, and the β component can be left in the filtration residue so as to be used as a binder.

In the present invention, the solvent-extraction and filtration step is combined with the calcination step following thereto, and therefore the object of the solvent-extraction and filtration can be attained by a very simple process, wherein only one kind of solvent is used and only two times of primary and secondary extraction and filtration operations are carried out.

Moreover, the solvent used in the secondary extraction can be again used in the primary extraction, and therefore, although the amount of solvent to be used depends upon the physical properties of the aimed carbon article, the object of the extraction and filtration can be generally attained by using 3—8 times amount (by weight) of solvent based on the amount of the heat treated pitch. Further, a large amount of β component can be accompanied to QI component, and therefore the yield of the resulting carbon powders based on the amount of the starting coal tar pitch is improved, and the solvent to be used in the present invention can be selected from the wide range of tar middle oil, light oil, toluene, benzene and the like.

In order to produce carbon powders according to the present invention, which can be stably made into a carbon article without the use of a binder, it is necessary that the heat treated pitch is subjected to a solvent-extraction and filtration to produce a solvent-extraction and filtration residue having characteristic values of BI>90 wt%, and QI<95 wt%.

The solvent-extraction and filtration residue can be easily obtained by a simple process as described above. When the extraction and filtration residue contains less than 90% by weight of BI component, the residue contains a large amount of remaining extraction solvent and a large amount of remaining BS component, which is derived from the heat treated pitch, and therefore the filtration residue has a high adhesive force and the handling thereof in a calcination step is difficult. Moreover, the filtration residue contains a large amount of BS component having a poor caking property, and therefore the filtration residue must contain more than 90% by weight of BI component. Further, when the filtration residue contains more than 95% by weight of QI component, the amount of β component acting as a binder component is small, and therefore it is difficult to produce carbon powders which can be stably made into a large size carbon article without the use of a binder.

Following to the solvent-extraction and filtration step, the extraction and filtration residue is calcined at a temperature of 250—500°C under an inert gas atmosphere.

The calcination treatment is carried out in order to remove solvent remaining in the extraction and filtration residue, and a slight amount of low boiling point volatile matter derived from the heat treated pitch and remaining in the residue, both of which solvent and low boiling point volatile matter cause cracks and expansion of the green shaped article produced from the resulting carbon powders, during the firing and graphitization steps, and further to thermally polymerize a part of β component, which has been left in the extraction and filtration residue in the solvent-extraction and filtration step, into QI component.

When an extraction and filtration residue having a BI component content of higher than 90% by weight is subjected to the above described calcination treatment, the QI component converted from the β component by the thermal polymerization reaction during this calcination is different from the mesophase QI component formed during the heat treatment of coal tar pitch at a temperature of 350—600°C, and is present in the form of fine particles and surrounds the mesophase QI component formed during the heat treatment step of coal tar pitch. Moreover, when the calcination temperature is properly selected, the β component has excellent caking property and acts as a binder in the production of a carbon article.

As described above, low boiling point volatile matter can be removed by the calcination step without losing the caking property of β component, and therefore cracks and expansion, due to the presence of the low boiling point volatile matter, of a green shaped article produced from the resulting carbon powders do not occur during the firing and graphitization steps. As the result, a carbon article can be stably produced without the use of a binder.

A necessary calcination temperature is selected within the range of 250—500°C.

When the calcination temperature is lower than 250°C, the QI component-forming reaction of β component hardly proceeds, and low boiling point volatile matter cannot be fully removed. When the calcination temperature is higher than 500°C, the QI component formed from β component loses rapidly its caking property, and it is impossible to produce a carbon article without the use of a binder.

It is necessary that the calcined product has characteristic values of BI>95 wt%, QI>80 wt%, and 15 wt%>VM>4 wt%. A proper calcination temperature is selected within the range of 250—500°C depending upon the characteristic values of the solvent-extraction and filtration residue, so as to obtain a calcined product having the above described characteristic values. When the value of BI does not exceed 95% by weight, the calcined product contains a large amount of low boiling point volatile matter, which is derived from BS component having poor caking property, and therefore a green shaped article formed from the calcined product cracks and expands during its firing and graphitization steps due to the presence of the volatile matter. Further, when the value of QI is not larger than 80% by weight, a green shaped article formed from the calcined product cracks and expands due to the presence of volatile matter mainly due to β component. The term "VM" in the above described characteristic values means the amount of volatile matter when the calcined product is heated at 800°C for 7 minutes. The volatile matter is mainly due to BS component and β component. When the value of VM is not less than 15% by weight, a shaped article formed from the calcined product cracks and expands during the firing and graphitization. When VM is not more than 4% by weight, this means that β component has been excessively changed into QI component, and therefore the caking property of the β component is poor, and the calcined product cannot be made into a carbon article without the use of a binder.

The inventors have further found out that a continuous type externally heating rotary kiln is most suitable for carrying out the calcination treatment in a commercial scale.

When a solvent-extraction and filtration residue containing more than 90% by weight of BI component is calcined in a rotary kiln, the residue can be quantitatively transported and charged into the kiln by a screw-feeder, and can be uniformly heated and smoothly moved in the kiln, whereby a calcined product having a stable quality can be continuously obtained.

The calcined product as such can be made into a carbon article without the use of a binder. Moreover, when the production conditions of the calcined product are properly selected, that is, when the property and the heat treatment temperature of starting pitch, the property of the solvent-extraction and filtration residue, the calcination temperature and other conditions are properly selected, there can be produced various isotropic carbon articles having widely ranging properties, which carbon articles range from a carbon article having a relatively low density of 1.5 g/cm³ and a relatively low flexural strength of 300 kg/cm² to a carbon article having a high density of 2.0 g/cm³ and a high flexural strength of 1,000 kg/cm², which have never been attained in a conventional method.

Further, carbon articles having an optical electric resistivity within the range of 900—4,000 μΩ · cm can be obtained. In general, when the starting pitch contains a large amount of QI component, a carbon article having high electric resistivity, density and strength is apt to be obtained. When a large amount of QI component is formed during the heat treatment step, a carbon article having relatively low density and strength and further having a low electric resistivity is apt to be obtained. When the amount of β component in the solvent-extraction and filtration residue is increased, or when the amounts of VM and β component contained in the calcined product are increased by carrying out a calcination at a low temperature, a carbon article having high density and strength is apt to be obtained, but a green shaped article formed from the calcined product is apt to crack and expand during its firing and graphitization steps. Further, when the forming pressure is increased, a carbon article having high density and strength is apt to be obtained, but cracks and expansion of the green shaped article are apt to occur during the firing and graphitization steps. Accordingly, carbon articles having the above described optional physical properties can be obtained by combining properly the above described conditions.

The inventors have further investigated and found out that, when the calcined product is classified into a coarse particle component consisting mainly of relatively coarse particles and a fine particle component consisting mainly of relatively fine particles, the calcined product can be used as raw material carbon powders for the production of carbon articles having more widely ranging properties. The properties of carbon articles obtained from each of the coarse particle component and the fine particle component vary depending upon the characteristic values of the calcined product or the amount ratio of the classified two components, but in general, a carbon article obtained from the coarse particle component has relatively low density and strength, and has relatively high electric resistivity, and a carbon article produced from the fine particle component has relatively high density and strength and has relatively low electric resistivity as compared with a carbon article produced directly from the calcined product.

Accordingly, when the calcined product is subjected to the classification treatment, there can be produced graphitized isotropic various carbon articles having widely ranging properties, that is, carbon articles ranging from a carbon article having a relatively low density of 1.4 g/cm³ and a relatively low flexural strength of 200 kg/cm² to a carbon article having an ultra-high density of 2.05 g/cm³ and a high flexural strength of 1,300 kg/cm², which have never been attained by a conventional method. Moreover, carbon articles having an optional electric resistivity within the range of 800—5,000 µΩ · cm can be obtained. It is most advantageous for commercial purpose to use an air centrifugal classification machine in the classification of the calcined product.

The merit of the use of the air centrifugal classification machine in the classification of the calcined product is as follows. The calcined product having various particle sizes can be easily classified into a coarse particle component and a fine particle component in a commercial scale. Further, the inventors have investigated and found out that ash, which is contained in the raw material pitch and in the solvent and the like, and remains in the calcined product, is concentrated in the coarse particle component by the classification, and hence the fine particle component is used as high-purity raw material carbon powders having a low ash content. The reason is that the air centrifugal classification machine classifies particles by the differences of particle sizes and specific gravities. Therefore, ashes such as fine Al, Si, Fe and the like, which have a specific gravity larger than that of carbon, are easily moved into the coarse particle component and are contained therein.

The inventors have further made various investigations in addition to the above described novel method of producing carbon powders, and have found out that, when a calcined product produced by the above described method or a classified product of the calcined product is subjected to a forced oxidation treatment in air at a temperature of 100—300°C, a carbon article having a very high electric resistivity can be obtained without the use of a binder.

According to this method, graphitized isotropic carbon articles having an electric resistivity of up to 8,000 µΩ · cm can be produced without the use of a binder.

In general, the calcined product or the classified product of the calcined product is very stable at room temperature, but is inherently chemically active contrary to an ordinary filler coke, and therefore the calcined product or the classified product thereof absorbs rapidly oxygen in air at a temperature higher than 100°C. This oxidation product can be formed into a carbon article without the use of a binder, and particularly the graphitized carbon article has a high electric resistivity.

However, when the calcined product as such or the classified product thereof is subjected to an oxidation treatment at a temperature higher than 300°C, both the calcined product and the classified product thereof lose their caking property and cannot be formed into a carbon article without the use of a binder.

Accordingly, the oxidation treatment of the calcined product or the classified product thereof in air must be carried out at a temperature of 100—300°C. The oxidation treatment can be carried out by forcedly blowing air into the reaction system while heating and stirring the calcined product or the classified product thereof.

As described above, the method for producing carbon powders according to the present invention can give carbon powders which can be made into a novel carbon article without the use of a binder contrary to a conventional method. Moreover, when the production condition for aimed carbon articles from the carbon powders is varied, carbon articles having widely ranging properties can be obtained in a very simple manner in a commercial scale. Particularly, carbon articles having an ultra-high density and a high strength, which have never been attained by conventional technics, can be produced. The present invention can be applied not only to coal tar pitch, but also to petroleum pitch and bituminous substances obtained from coal by subjecting the coal to liquefaction and de-ashing treatments.

The following examples are given for the purpose of illustration of this invention and are not intended as limitations thereof.

Example 1

A coal tar pitch having characteristic values of a softening point (R.B. method): 80°C, BI: 19 wt%, and QI: 4 wt%, was heat treated at a temperature of 455°C for 10 minutes in a heat treatment vessel to obtain a heat treated pitch, which had characteristic values of BI: 50.6 wt%, and QI: 28.7 wt%.

By using 600 parts by weight of tar middle oil (boiling point range: 140—270°C), 100 parts by weight of the heat treated pitch was subjected to two step treatments of a primary extraction and filtration treatment and a secondary extraction and filtration treatment. In the primary and secondary extractions, the extraction temperature was 120°C and the extraction time was 1 hour. The filtrations were carried out under pressure. The resulting solvent-extraction and filtration residue had characteristic values of BI: 96.3 wt%, and QI: 78.2 wt%.

The solvent-extraction and filtration residue was successively calcined at a temperature of 340°C under an N₂ atmosphere in an externally heating-type rotary kiln. The resulting calcined product had characteristic values of BI: 98.0 wt%, QI: 89.5 wt%, and VM: 8.5 wt%.

The calcined product was directly formed into a shaped article having a dimension of 100 mmφ×100 mm length without the use of a binder under a pressure of 800 kg/cm², and the green shaped article was fired and then graphitized at a temperature of 2,700°C according to a conventional method.

Physical properties of the resulting graphite block are shown in the following Table 1.

The above obtained calcined product was separated into a coarse particle component and a fine particle component by means of an air centrifugal classification machine. In this separation, the calcined product was separated into 15% by weight of a coarse particle component and 85% by weight of a fine particle component. Characteristic values of each component are shown in the following Table 2. Each component was formed, fired and graphitized to produce a graphite block without the use of a binder under the same conditions as those in the direct production of the graphite block from the calcined product. Physical properties of the graphite block are shown in Table 1. In this treatment, the graphitization was effected at the same temperature of 2,700°C as in the direct production of the graphite block from the calcined product.

It can be seen from Table 1 that the use of the calcined product or the fine particle component results in a carbon article having high density and strength, and particularly the use of the fine particle component results in a carbon article having a density and a strength higher than those of the carbon article directly produced from the calcined product. However, the carbon article produced from the coarse particle component is lower in the density and is higher in the electric resistivity than the carbon articles directly produced from the calcined product or produced from the fine particle component.

As seen from Table 2, ash is concentrated in the coarse particle component by the classification, and therefore the fine particle component is high-purity raw material carbon powders.

TABLE 1
Properties of graphite blocks obtained in Example 1

| Starting carbon powder | Bulk density (g/cm$^3$) | Flexural strength (kg/cm$^2$) | Compression strength (kg/cm$^2$) | Electric resistivity ($\mu\Omega \cdot$ cm) | Shore hardness (Hs) | Anisotropic ratio (in flexural strength) |
|---|---|---|---|---|---|---|
| Calcined product | 1.93 | 980 | 2,050 | 1,550 | 86 | 1.00 |
| Fine particle component | 2.00 | 1,150 | 2,240 | 1,380 | 88 | 1.00 |
| Coarse particle component | 1.76 | 650 | 1,520 | 2,100 | 74 | 1.01 |

TABLE 2
Characteristic values of fine particle component and
coarse particle component in Example 1

| | BI (%) | QI (%) | VM (%) | Ash (%) |
|---|---|---|---|---|
| Fine particle component | 98.0 | 89.2 | 8.6 | 0.10 |
| Coarse particle component | 98.0 | 89.8 | 8.5 | 0.45 |

Example 2

The solvent-extraction and filtration residue obtained in Example 1 was calcined at 360°C under an N$_2$ atmosphere by means of a continuous type rotary kiln. The resulting calcined product had characteristic values of BI: 98.5 wt%, QI: 90.5 wt%, and VM: 8.0 wt%.

The calcined product was directly formed into a shaped article having a dimension of 100 mm$\phi \times$100 mm length without the use of a binder under a pressure of 1,000 kg/cm$^2$ and the green shaped article was fired and graphitized according to a conventional method. Further, the calcined product was separated into 13% by weight of a coarse particle component and 87% by weight of a fine particle component by means of an air centrifugal classification machine. Each of the coarse and fine particle components was formed, fired and graphitized without the use of a binder under the same conditions as in the direct production of the graphite block from the calcined product. In all the processes, the graphitization was effected at a temperature of 2,700°C. Physical properties of the graphite blocks produced from the calcined product, the coarse particle component or the fine particle component are shown in the following Table 3. It can be seen from Table 3 that the use of the calcined product as such or the fine particle component results in a carbon article having high density and strength. Particularly, the use of the fine particle component results in a carbon article having an ultra-high strength of a flexural strength of 1,300 kg/cm$^2$. However, the use of the coarse particle component results in a carbon article, which is somewhat lower in the density and is somewhat higher in the electric resistivity than the carbon articles directly produced from the calcined product or produced from the fine particle component.

TABLE 3
Properties of graphite blocks obtained in Example 2

| Starting carbon powder | Bulk density (g/cm³) | Flexural strength (kg/cm²) | Compression strength (kg/cm²) | Electric resistivity (μΩ · cm) | Shore hardness (Hs) |
|---|---|---|---|---|---|
| Calcined product | 2.00 | 1,050 | 2,150 | 1,350 | 88 |
| Fine particle component | 2.05 | 1,300 | 2,550 | 1,150 | 90 |
| Coarse particle component | 1.78 | 750 | 1,500 | 1,800 | 78 |

**Example 3**

A coal tar pitch having the same characteristic values as those of the pitch used in Example 1 was heat treated at a temperature of 460°C for 30 minutes in an autoclave to obtain a heat treated pitch having characteristic values of BI: 69.8 wt%, and QI: 51.7 wt%. The heat treated pitch was subjected to a solvent-extraction and filtration treatment according to Example 1 to obtain an extraction and filtration residue having characteristic values of BI: 95.2 wt%, and QI: 81.1 wt%.

The solvent-extraction and filtration residue was calcined at a temperature of 360°C under an $N_2$ atmosphere in a continuous-type rotary kiln to obtain a calcined product having characteristic values of BI: 98.0 wt%, QI: 89.0 wt%, and VM: 7.7 wt%.

The calcined product was finely divided, and the fine powders were formed into a shaped article having a dimension of 100 mmφ×100 mm length under a pressure of 800 kg/cm² without the use of a binder, and the resulting green shaped article was fired and graphitized according to a conventional method. Further, the above obtained calcined product was classified into 26% by weight of a coarse particle component and 74% by weight of a fine particle component by means of an air centrifugal classification machine. Each of the coarse and fine particle components was formed into a shaped article without the use of a binder, and the green shaped article was fired and graphitized under the same conditions as those in the direct production of the graphite block from the calcined product. In all the processes, the graphitization was effected at a temperature of 2,700°C.

The following Table 4 shows physical properties of the graphite blocks produced from the calcined product, coarse particle component and fine particle component. The use of the calcined product or the fine particle component results in a carbon article having a high density, a high strength and a low electric resistivity.

TABLE 4
Properties of graphite blocks obtained in Example 3

| Starting carbon powder | Bulk density (g/cm³) | Flexural strength (kg/cm²) | Compression strength (kg/cm²) | Electric resistivity (μΩ · cm) | Shore hardness (Hs) |
|---|---|---|---|---|---|
| Calcined product | 1.80 | 700 | 1,800 | 900 | 74 |
| Fine particle component | 1.82 | 850 | 1,950 | 800 | 76 |
| Coarse particle component | 1.72 | 500 | 1,250 | 1,400 | 70 |

**Example 4**

A coal tar pitch having characteristic values of SP (R. & B. method): 80°C, BI: 34.0 wt%, and QI: 18.1 wt%, was heat treated at a temperature of 440°C for 10 minutes in an autoclave to obtain a heat treated pitch having characteristic values of BI: 48.5 wt%, and QI: 26.4 wt%. The heat treated pitch was subjected to a solvent-extraction and filtration treatment according to the method described in Example 1 to obtain a solvent-extraction and filtration residue having characteristic values of BI: 94.2 wt%, and QI: 76.5 wt%. The solvent-extraction and filtration residue was calcined at a temperature of 400°C under an $N_2$ atmosphere in a continuous-type rotary kiln to obtain a calcined product having characteristic values of BI: 99.0 wt%, QI: 97.5 wt%, and VM: 6.2 wt%. The calcined product was formed into a shaped article having a dimension of 100 mmφ×150 mm length under a pressure of 600 kg/cm² without the use of a binder, and the resulting green shaped article was fired and graphitized according to a conventional method. Further, the above obtained calcined product was classified into 19% by weight of a coarse particle component and 81% by weight of a fine particle component by means of an air centrifugal classification machine. Each of the coarse and fine particle components was formed into a shaped article without the use of a binder, and the green shaped article was fired and graphitized under the same conditions as those in the direct production of the graphite block from the calcined product. In all the processes, the graphitization was effected at a temperature of 2,700°C.

The following Table 5 shows physical properties of the graphite blocks produced from the calcined product, the coarse particle component and the fine particle component. All the resulting graphite blocks are carbon articles having a low density, a low strength and a high electric resistivity.

TABLE 5
Properties of graphite blocks obtained in Example 4

| Starting carbon powder | Bulk density (g/cm³) | Flexural strength (kg/cm²) | Compression strength (kg/cm²) | Electric resistivity (μΩ · cm) | Shore hardness (Hs) |
|---|---|---|---|---|---|
| Calcined product | 1.58 | 430 | 850 | 3,950 | 58 |
| Fine particle component | 1.60 | 480 | 1,050 | 3,200 | 61 |
| Coarse particle component | 1.48 | 300 | 700 | 5,100 | 54 |

Example 5

The calcined product obtained in Example 1 was heated at 100°C, 200°C or 300°C in a kneader under stirring, while forcedly blowing air into the kneader, to produce 3 kinds of oxidation products of the calcined product. It was found from the measurement of the oxygen content in the resulting 3 kinds of oxidation products that, when the treating temperature of a calcined product is higher, the oxygen content in the oxidation product increases, that is, oxidation of calcined product proceeds in an increased amount. This relation is illustrated in the accompanying single Figure.

Each of the oxidation products was formed into a shaped article having a dimension of 100 mmφ×100 mm length under a pressure of 800 kg/cm² without the use of a binder, and the green shaped article was fired and then graphitized at a temperature of 2,700°C by a conventional method to obtain a graphite block.

The following Table 6 shows physical properties of a graphite block produced from each of oxidation products of a calcined product together with, for comparison, physical properties of a graphite block directly produced from the calcined product. It can be seen from Table 6 that as the oxidation treatment temperature is higher, the resulting carbon article has a higher electric resistivity, and particularly a calcined product oxidized at 300°C results in a carbon article having an electric resistivity of as high as 8,100 μΩ · cm.

When the oxidation treatment temperature of a calcined product exceeds 300°C, the caking property thereof was lost, and a graphite block was not able to be obtained without the use of a binder.

TABLE 6
Properties of graphite blocks obtained in Example 5

| Starting carbon powder | Bulk density (g/cm$^3$) | Flexural strength (kg/cm$^2$) | Compression strength (kg/cm$^2$) | Electric resistivity (μΩ · cm) | Shore hardness (Hs) |
|---|---|---|---|---|---|
| Calcined product not treated with air | 1.93 | 980 | 2,050 | 1,550 | 86 |
| Calcined product treated with air at 100°C | 1.85 | 830 | 1,780 | 1,880 | 84 |
| Calcined product treated with air at 200°C | 1.73 | 530 | 1,090 | 3,810 | 70 |
| Calcined product treated with air at 300°C | 1.47 | 310 | 780 | 8,100 | 51 |

**Claims**

1. A method for producing carbon powders, comprising heat treating a coal tar pitch at a temperature of 350—600°C, subjecting the heat treated pitch to a solvent-extraction and filtration to obtain a solvent-extraction and filtration residue having characteristic values of BI (benzene-insoluble component)>90 wt%, and QI (quinolin-insoluble component)<95 wt%, and calcining the residue at a temperature of 250—500°C under an inert gas atmosphere to obtain a calcined product having characteristic values of BI>95 wt%, QI>80 wt%, and VM (volatile matter): 4—15 wt%.

2. A method according to claim 1, further comprising classifying the calcined product into a coarse particle component and a fine particle component in an optional amount ratio.

3. A method according to claim 1, further comprising subjecting to the calcined product to an oxidation treatment at a temperature of 100—300°C in air.

4. A method according to claim 2, comprising further subjecting each classified component to an oxidation treatment at a temperature of 100—300°C in air.

5. A method for producing a carbon article, comprising heat treating a coal tar pitch at a temperature of 350—600°C, subjecting the heat treated pitch to a solvent-extraction and filtration to obtain a solvent-extraction and filtration residue having characteristic values of BI>90 wt%, and QI<95 wt%, calcining the residue at a temperature of 250—500°C under an inert gas atmosphere to obtain a calcined product having characteristic values of BI>95 wt%, QI>80 wt%, and VM: 4—15 wt%, classifying the calcined product into a coarse particle component consisting mainly of coarse particles and a fine particle component consisting mainly of fine particles, and forming each classified component into a shaped article without the use of a binder, firing the green shaped article, and graphitizing the fired article.

6. A method according to claim 5, comprising further subjecting each classified component to an oxidation treatment at a temperature of 100—300°C in air, and forming the oxidized component into a shaped article without the use of a binder, firing the green shaped article, and graphitizing the fired article.

**Patentansprüche**

1. Verfahren zur Herstellung von Kohlenstoffpulver, dadurch gekennzeichnet, daß man ein Kohleteerpech bei einer Temperatur von 350 bis 600°C einer Hitzbehandlung unterzieht, das hitzebehandelte Pech durch Lösungsmittelextraktion und Filtration in einen lösungsmittelextrahierten und filtrierten Rückstand überführt, der einen BI-Wert (benzolunlösliche Komponente) von über 90 Gewichtsprozent und einen QI-Wert (chinolinunlösliche Komponente) von unter 95 Gewichtsprozent hat, und den Rückstand bei einer Temperatur von 250 bis 500°C unter einer Inertgasatmosphäre durch

9

Calcinierung in ein calciniertes Produkt überführt, das einen BI-Wert von über 95 Gewichtsprozent, einen QI-Wert von über 80 Gewichtsprozent und einen VM-Wert (flüchtige Bestandteile) von 4 bis 15 Gewichtsprozent aufweist.

2. Verfahren nach Anspruch 1, dadurch gekennzeichnet, daß man das calcinierte Produkt unter einem wahlweisen Mengenverhältnis in eine grobteilige Komponente und eine feinteilige Komponente klassiert.

3. Verfahren nach Anspruch 1, dadurch gekennzeichnet, daß man das calcinierte Produkt bei einer Temperatur von 100 bis 300°C in Luft einer Oxidationsbehandlung unterzieht.

4. Vefahren nach Anspruch 2, dadurch gekennzeichnet, daß man jede klassierte Komponente bei einer Temperatur von 100 bis 300°C in Luft einer Oxidationsbehandlung unterzieht.

5. Verfahren zur Herstellung eines Kohlenstoffkörpers dadurch gekennzeichnet, daß man ein Kohleteerpech bei einer Temperatur von 350 bis 600°C einer Hitzebehandlung unterzieht, das hitzebehandelte Pech durch Lösungsmittelextraktion und Filtration in einen lösungsmittelextrahierten und filtrierten Rückstand überführt, der einen BI-Wert (benzolunlösliche Komponente) von über 90 Gewichtsprozent und einen QI-Wert (chinolinunlösliche Komponente) von unter 95 Gewichtsprozent hat, den Rückstand bei einer Temperatur von 250 bis 500°C unter einer Inertgasatmosphäre durch Calcinierung in ein calciniertes Produkt überführt, das einen BI-Wert von über 95 Gewichtsprozent, einen QI-Wert von über 80 Gewichtsprozent und einen VM-Wert (flüchtige Bestandteile) von 4 bis 15 Gewichtsprozent aufweist, das calcinierte Produkt in eine grobteilige Komponente, die vorwiegend aus groben Teilchen besteht, und in eine feinteilige Komponente, die vorwiegend aus feinen Teilchen besteht, klassiert und jede klassierte Komponente zu einem Formkörper formt, den grünen Formkörper brennt und den gebrannten Körper graphitiert.

6. Verfahren nach Anspruch 5, dadurch gekennzeichnet, daß man jede klassierte Komponente bei einer Temperatur von 100 bis 300°C in Luft einer Oxidationsbehandlung unterzieht und die oxidierte Komponente ohne Verwendung eines Bindemittels zu einem Formkörper formt, den grünen Formkörper brennt und den gebrannten Körper graphitiert.

**Revendications**

1. Une méthode de production de poudres de carbone dans laquelle on soumet une variété de brai à un traitement thermique à une température de 350—600°C puis le brai thermiquement traité est soumis à un traitement d'extraction de solvant et de filtration pour obtenir un résidu d'extraction de solvant et de filtration présentant des valeurs caractéristiques de BI (composant insoluble de benzène) supérieure à 90 wt%, de QI (composant insoluble de quinoline) inférieure à 95 wt% et procédent à une calcination du résidu à une température de 250—500°C, sous une atmosphère de gaz inerte afin d'obtenir un produit calciné ayant des valeurs caractéristiques de BI (plus de 95 wt%), de QI (plus de 80 wt%) et de MV ou matière volatile (de 4 à 15 wt%).

2. Une méthode conforme à le revendication 1, qui comprend, de plus, une classification du produit calciné en un composant à grosses particules et un composant à fines particules dans une relation optionnelle.

3. Une méthode conforme à la revendication 1, qui comprend de plus, l'exposition du produit calciné à une traitement d'oxydation à une température de 100 à 300°C à l'air.

4. Une méthode conforme à la revendication 2, qui comprend une nouvelle exposition de chaque composant classifié à un traitement d'oxydation à une température de 100 à 300°C à l'air.

5. Une méthode pour la production d'un article de carbone comprenant la traitement thermique ou brai sous une température de 350 à 600°C, sousmettant le brai thermiquement traité à une extraction de solvant et une filtration afin d'obtenir un résidu d'extraction de solvant et de filtration présentant das valeurs caractéristiques de BI (plus de 90 wt%) et de QI (moins de 95 wt%), et procédant alors à une calcination du résidu à une température de 250 à 500°C sous une atmosphère de gaz inerte afin d'obtenir un produit calciné présentant des valeurs caractéristiques de BI (plus de 95 wt%), de QI (plus de 80 wt%) et de MV (4 à 15 wt%); classifiant le produit calciné en un composant à grosses particules consistant essentiellement en grosses particules et un composant à fines particules consistant essentiellement en fines particules et façonnant chacun des composants classifiés en un article formé sans utiliser de liant, et procédant enfin à la cuisson de l'article semi-fini et finalement à une graphitisation de l'article cuit.

6. Une méthode conformément à la revendication 5, comprenant un nouveau passage de chaque composant classifié par un traitement d'oxydation à une température de 100 à 300°C à l'air, et façonnant le composant oxydé en un article formé sans utiliser de liant, et procédant à une cuisson de l'article puis à une graphitisation de l'article cuit.